# EUROPEAN PATENT APPLICATION

(11) **EP 0 732 581 A2**
(43) Date of publication of application: **18.09.1996**
(21) Application number: 96830110.1
(22) Date of filing: 13.03.1996
(51) Int. Cl.: G01N 21/59

(54) **Photodensitometer for monitoring safety badges**

(30) Priority: 16.03.1995 IT MI950511
(71) Applicant: FONDAZIONE CENTRO SAN RAFFAELE DEL MONTE TABOR, 20132 Milano (IT)
(72) Inventor: Avigdor,Lev, Milano Due-Segrate(MI) (IT)
(74) Representative: Aimi, Luciano

(57) **Abstract**

A parallel photodensitometer is described wherein a plurality of photodiodes assess the transmittance or optical density (OD) of as many blackening areas in a photographic film exposed to ionizing radiations based on the light emitted by a corresponding set of LEDs placed on the opposed film side, while a corresponding number of control photodiodes read the direct light as emitted by the relative LEDs.

The described photodensitometer is particularly useful for the rapid, accurate and organized reading, to be executed at regular intervals, of safety badges sensitive to ionizing radiations as worn by personnel subject to radioactive pollution risk.

## Description

The present invention relates to photodensitometers or blackening meters and in particular to a parallel photodensitometer for assessing the blackening ratio or optical density (OD) of portions of a film sensitive to ionizing radiations that are exposed to an intentional or accidental radiation, particularly when worn as a safety and control measure by personnel prone to be subjected to said radiations.

It is known that the photodensitometers, or simply densitometers, find peculiar use in assessing the exposition degree to dangerous ionizing radiations, based on the blackening ratio of badges placed on suited body points, generally on breast of people professionally exposed to the hazard of such radiations, such as for example the personnel of radiodiagnostics and radiotherapy departments of hospital structures. The medical and paramedical personnel working in such departments is actually bound to wear, for safety and prevention purposes, particular badges, generally made from light-proof plastic material, internally bearing a film portion sensitive to radiations such as X rays, gamma rays, etc.; in the case of big hospital structures, the number of personnel working in those hazardous departments amounts to hundreds of people, and for each person a number of controls must be carried out on personalized badges at regular intervals.

Each person of these departments is actually wearing a mark or badge comprising a portion of sensitive film on which an identifying number is quoted and which is subdivided in several areas (in general five) that are defined by metal plates or "filters" having different shielding power; thus, when the person is exposed to the radiations, the film areas behind the metal plates become differently blackened in a manner that is typical for the kind of radiation and "filter". The measuring of the various areas for the whole concerned people brings thus easily about thousands of appraisals for each control cycle.

Nowadays the readings of the various film portions differently exposed are carried out manually by recording the registration number of each person, inserting by hand the exposed film into the densitometer the top part of which containing a photoemitter must be pulled down to contact the film, after which one waits for some seconds to let the reading stabilize, lifts up again the top part, the reading is recorded, and when the film comprises several differently blackened areas the film is shifted to read the subsequent area. It is clear that the sequence of these manual operations requires a lot of time and the resulting reading can suffer evaluation errors.

Densitometers for various applications are known in the art. Thus US-A-3,807,805 discloses an electro-optical densitometer for spectrophotometry having an electroluminescent diode that provides light pulses through the sample and the analytical measure of the transmitted light.

WO-A-8201940 relates to a developing apparatus of radiographic films comprising a control densitometer that measures the density of three exposed areas on the film in order to sequentially compare their blackening with given limits within three orders of magnitude.

From US-A-4,757,334 there is known a densitometer that controls photoelectrically the density on a film strip and compares it automatically with a reference film for the subsequent correction of the emitted light.

US-A-4,983,044 refers to the densitometric measurement within a range of densities included in the field of linear response of a film, so as to give a quantitative determination of signals produced on the film by radioactively labeled biological molecules.

None of these densitometers is however expected to be used in screening on a large scale of people exposed to ionizing radiations.

The present invention intends therefore to provide a parallel photodensitometer for the rapid, precise, positive and organized reading of a lot of film samples or other transparent supports to be specifically used in hospitals and other medical structures where ionizing radiations are employed.

The densitometer according to the present invention is substantially formed by a light tight casing including therein a set of measuring photodiodes suitably spaced apart and combined with as many opposed LEDs that are in turn placed side by side to fiducial photodiodes; into the plane gap having a width of about 1 mm between the measuring photodiodes and the corresponding emitting LEDs there is inserted, through a light tight slot, a film having a number of more or less blackened areas in the various places that correspond to the individual measuring photodiodes. When closing a door shielding the insertion slot, the device is put into action with the sequential lighting of the various LEDs and surveying of the light transmitted across the film by the opposed photodiodes.

The measurement requires only few seconds, is not affected by the existing light, and the results are directly transmitted to the electronic records containing the identifying data of the concerned individual person.

The structure and operation of the densitometer according to the present invention will be apparent from the following specification made with reference to the attached drawings, wherein:
Figure 1 shows in a perspective view the external appearance of the densitometer according to the present invention;
Figure 2 shows still in a perspective view a possible locking member of the access door to the interior of the densitometer of Fig. 1;
Figure 3 is a perspective view of the unit surveying the blackening densities inside the densitometer of Fig. 1; and
Figure 4 shows in cross section a detail of a photodiode member included in the unit of Fig. 3.

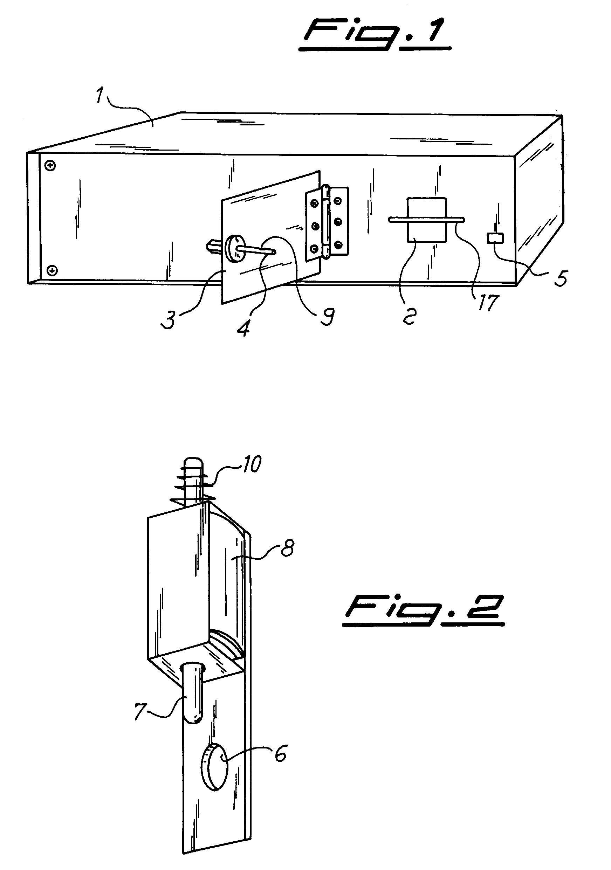

As seen in Fig. 1, the densitometer according to the present invention comprises a generally parallelepipedal casing 1, preferably made of metal, including an entry opening 2 closed by an hinged door 3 having a locking pin 4 intended to enter, on closure, an opening 5 of casing 1, inside said opening being present a locking member preferably constructed as shown in Fig. 2. This locking member stiffly fixed to the interior wall of casing 1 comprises a hole 6 intended to receive an end of locking pin 4, and a latch 7 shaped as a metal rod the mid part of which is surrounded by an electromagnet 8 made in a known manner by a winding of a leading wire. The pin 4 once introduced into opening 5 activates a microswitch 19 that closes an electric circuit to start the densitometer and consequently the electromagnet 8. The latter releases latch 7, the lower end of which enters a hole 9 of pin 4 thus locking door 3.

At the end of the operating cycle a monitoring microcomputer inside casing 1 goes out automatically thus taking the input from the assembly, so that the electromagnet 8 being no longer fed releases latch 7 that is taken back to its raised rest position by a return spring 10 secured to the upper end of latch 7, thus releasing the locking pin 4 and allowing door 3 to be opened in order to change the film and start a new operation.

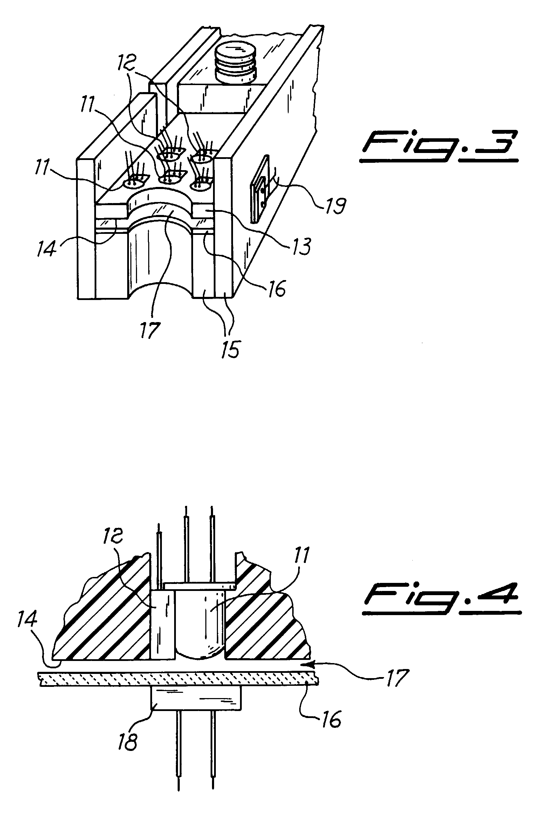

Considering now Fig. 3 relating to the real sensing unit of the densitometer of Fig. 1, one can see that this unit includes a set of photoemitters 11 formed by LEDs emitting a wide band light about 570 nm, each of which is set side by side to a fiducial photodiode 12; this set of photoemitters (five in the shown case) ranged coplanar according a pre-established arrangement are buried in a plate 13 of an opaque plastics, preferentially black polytetrafluoroethylene, so that their lower photoemitter ends are exactly flush with the lower surface 14 of plate 13. The whole is in turn fixed in an insulating structure 15 also of stiff opaque plastics.

As it is better visible in Fig. 4, under the surface 14 of plate 13 a transparent plate of glass 16 is placed parallel thereto and defines together with said surface 14 a slot or gap 17 having a width of about 1 mm and intended to receive the exposed film strip to be examined. Underneath the transparent plate 16 there are disposed, exactly opposed to each photoemitter 11, as many measuring photodiodes 18 intended to survey the directional light emitted by LEDs 11 and which could pass, to a more or less extent according to blackening, through the film to be examined.

In such a manner it is possible to measure the blackening of films in an optical density (OD) range from 0 to 6.5.

The operation of the densitometer according to the present invention, and the procedure followed to have the evaluation data of the type and amount and/or intensity of the radiation that struck the film and consequently was received by the person bearing the relevant film-containing badge will now be described.

As previously said, the monitoring badge fixed in general on the chest of people obliged to wear it for safety and control purposes is usually made of light-tight plastics and includes on the inside a rectangular portion of a sensitive film and a certain number of plates of different metals acting as a differential "filter" for shielding the various ionizing radiations. Since each metal plate lets differently the radiations through, this arrangement allows to ascertain later on, once the film was developed, to which radiation and how long the person wearing the badge was mainly exposed, as well as the radiation dose accumulated in the considered time (generally one month). When the recurrent control of monitoring badges applied to each person has to be carried out, the exposed film that was previously personalized by the registration number identifying the concerned person is taken out from the protecting badge, then subjected to the usual development and drying process, and finally inserted into the slot or gap 17 of densitometer 1 in such a manner that the orientation of the various, differently blackened areas coincides with the position of the photoemitting and photoreceiving members 11 and 18. At this moment door 3 is closed which will then be electromechanically locked by latch 7 and, thanks to its internal lining of rubber, will assure in turn the precise location and jamming of the film. This operation starts automatically up the system that is scheduled in such a manner that the LEDs 11 are lit and put out in sequence in order to avoid possible light interferences between different measuring photodiodes. At the end of the lighting and putting out operation cycle requiring few seconds, the light pulses perceived by the measuring photodiodes are converted in electrical pulses of different intensities according to the blackening of the film, and these are in turn converted into numerical or other data, that are treated and processed to be transferred to a computerized data base which stores and/or otherwise processes them. These data are for example compared by the computerized system with the data of the person corresponding to the registration number with a view to take if necessary possible countermeasures when the radiation dose allowed for that given person is exceeded.

The internal microcomputer can effect the measurements in different ways and times and carry out calculations and processes onto the obtained data, then the processed data are pooled and cumulatively directed to the data base of an external collecting computer according to the selected commutating protocol.

As to the technical aspects of the measurements that can be carried out by the densitometer of the present invention, the latter enables to effect measurements on films having blackening degrees covering a range of six and a half orders of magnitude, corresponding namely to blackenings comprised between about 0 and 5,000,000.

Another peculiarity of the densitometer of the present invention is the presence of fiducial photodiodes 12 each combined with one LED 11, which photodiodes have the task to directly measure the intensity of the small light portion emitted laterally by the corresponding LED, in such a manner that the system may adjust and conform itself to possible lighting differences from various LEDs and to possible transitory lighting changes, so that the light intensity noticed by the measuring photodiodes 18 is always reliable and fairly attests to the considered blackening degree. The directional broad-band light emission of LEDs 11 allows enough light to pass through the film and reach measuring photodiodes 18 within the full operational range of densitometer, while fiducial photodiodes 12 and the total absence of interfering lights due to the complete darkness of the working environment assure precise and steady measurements. The computerized system is thus also in a condition to notice possible misoperations if a given signal that had to come from any fiducial diode 12 should be missing.

Once finished the "reading" of each film, latch 7 is put out thus making possible to open door 3 and replace the measured film with a new exposed film.

Although the present invention has been illustrated according to a particular embodiment thereof, it will apparent to the skilled man that changes and/or alterations may be introduced therein without departing from the scope of the invention. It will thus be possible to change the number and arrangement of the LED-photodiode units according to different requirements, as well as the closing and locking system of insertion opening 2.

## Claims

1. A densitometer for measuring the blackening ratio of photoradiographic films, characterized in that the photoemitting member in-cludes two or more LEDs (light emitting diodes) (11) with which an equivalent number of measuring photodiodes (18) and fiducial photodiodes (12) are respectively combined.

2. The densitometer according to claim 1, characterized in that LED(11)-photodiode(18,12) units are arranged according a pre-established pattern corresponding to differently blackened areas onto a same portion of a photo-radiographic film.

3. The densitometer according to claim 1 or 2, characterized in that said fiducial photodiodes (12) are in a direct physical and optical contact with the corresponding LEDs (11).

4. The densitometer according to any previous claim, characterized in that between each LED-fiducial photodiode (11-12) pair and the corresponding measuring photodiode (18) a transparent plate (16) is placed in contact with said measuring photodiode (18) and at a distance of about 1 mm from said LED-fiducial photodiode (11-12) pair.

5. The densitometer according to any previous claim, characterized by comprising an outer casing (1) having an entrance opening (2,17) for inserting an exposed film to be measured, which opening can be light-tightly closed by a door (3).

6. The densitometer according to any previous claim, characterized in that its blackening measurement range corresponds to an optical density (OD) between 0 and 6.5.
